# EUROPÄISCHE PATENTSCHRIFT

(11) **EP 2 741 616 B1**
(45) Veröffentlichungstag und Bekanntmachung des Hinweises auf die Patenterteilung: **21.12.2016**
(21) Anmeldenummer: 12745484.1
(22) Anmeldetag: 03.08.2012
(51) Int. Cl.: A23L 5/30

(54) **VORRICHTUNG UND VERFAHREN ZUR HERSTELLUNG VON LEBENSMITTELN**
DEVICE AND METHOD FOR PRODUCING FOODS
DISPOSITIF ET PROCÉDÉ DE PRÉPARATION DE DENRÉES ALIMENTAIRES

(30) Priorität: 11.08.2011 DE 102011080860
(43) Veröffentlichungstag der Anmeldung: 18.06.2014
(73) Patentinhaber: Deutsches Institut für Lebensmitteltechnik e.V., 49610 Quakenbrück (DE)
(72) Erfinder: HUKELMANN, Bernhard, 49610 Quakenbrück (DE)
(74) Vertreter: Taruttis, Stefan Georg
(86) Internationale Anmeldenummer: PCT/EP2012/065300
(87) Internationale Veröffentlichungsnummer: WO 2013/020933

(56) Entgegenhaltungen:
- EP-A1- 1 952 737
- WO-A1-88/10550
- WO-A1-03/019985
- WO-A1-2011/062499
- WO-A2-02/45516
- US-A- 4 974 503

## Beschreibung

Die vorliegende Erfindung betrifft eine Vorrichtung und ein Verfahren, die zur Behandlung von Rohstoffen mit elektrischer Energie, insbesondere von Lebensmittelrohstoffen zur Herstellung von Lebensmitteln angepasst sind, insbesondere zur satzweisen oder kontinuierlichen Erwärmung von Lebensmittelrohstoffen. Bevorzugt betrifft die Erfindung eine Vorrichtung und ein Verfahren zur Herstellung von Lebensmitteln, insbesondere von Fleisch- und Wurstwaren oder Teigwaren, z.B. Brotteig, durch satzweises oder kontinuierliches Einbringen elektrischer Energie, insbesondere zum Erwärmen mittels Wechsel- oder Gleichstrom auf eine vorbestimmte Temperatur und/oder zum teilweisen Zellaufschluss und/oder zur Keimreduktion mittels Hochspannungsimpulsen. Die Vorrichtung zeichnet sich dadurch aus, dass sie ein gleichmäßiges Einbringen elektrischer Energie in Lebensmittelrohstoffe durch deren Querschnitt bzw. Volumen innerhalb kurzer Zeit erlaubt.

### Stand der Technik

Die DE 3214861 A1 beschreibt eine Vorrichtung mit zwei beabstandeten Plattenelektroden, auf denen mit Salzlösung imprägnierte Kontaktplatten liegen, zur Erwärmung eines in Folie verpackten Nahrungsmittels.

Die WO 88/10550 beschreibt eine Garvorrichtung mit Elektroden, die in Segmente aufgeteilt sind und in Form zweier beabstandeter Förderbänder antreibbar sind. Das zu garende Stück soll zwischen den Förderbandern bewegt werden, wobei die Elektrodensegmente gegen das Stuck belastet sind. Den Elektrodensegmenten kann der gesteuert zugeführt werden, sodass die Elektrodensegmente abwechselnd an- und ausgeschaltet werden können, um eine gezielte Steuerung des Stromflusses zu erlaubten

Die DE 3730042 A1 beschreibt das Garen von Lebensmittelstücken zwischen zwei beabstandeten, mit Strom beaufschlagten Elektroden, wobei der Strom als Maß für die erreichte Erwärmung zur Bestimmung der Garzeit gemessen wird.

Die DE 3419419 beschreibt die Erwärmung von Lebensmitteln zwischen Elektroden, von denen die eine Salzwasser als Leiter verwendet, mit Steuerung der Stromzufuhr über eine gemessene Temperatur.

Die DE 36 21 999 beschreibt die Messung des Garungszustands mittels eines mit Strom beaufschlagten Leitfähigkeitssensors.

### Aufgabe der Erfindung

Die Aufgabe der Erfindung liegt darin, eine alternative Vorrichtung und ein alternatives Verfahren zur Herstellung von Lebensmitteln bereitzustellen, die eine annähernd gleichmäßige Erwärmung von Lebensmitteln erlauben.

### Allgemeine Beschreibung der Erfindung

Bei der Vorbereitung der Erfindung hat sich gezeigt, dass bei der Erwärmung von Lebensmitteln zwischen zwei beabstandeten Elektroden, die mit Strom beaufschlagt sind, die Erwärmung von einem mehr oder weniger linienförmigen Strompfad durch das Lebensmittel ausgeht und eine verhältnismäßig lange Zeit unter Stromfluss erforderlich ist, um den gesamten Querschnitt des Lebensmittels zu erwärmen. Dabei hat sich gezeigt, dass zwischen den Elektroden im Wesentlichen nur ein fadenförmiger Strompfad ausgebildet wird, entlang dessen sich das Lebensmittel erwärmt. Durch die Erwärmung wiederum erhöht sich der Leitwert, so dass der ursprüngliche Strompfad zwischen zwei Elektroden mit zunehmender Zeit der Strombeaufschlagung eine höhere Leitfähigkeit erhält und entsprechend mehr Strom im Wesentlichen entlang dieses einen Strompfads zwischen zwei Elektroden fließt. In der Folge kann die Stromstärke nur allmählich erhöht werden, da sich die Wärme im Wesentlichen durch Wärmeleitung entlang des einen Strompfads ausbreitet. Als Lebensmittelrohstoff eignen sich Massen für Fleisch- und Wurstwaren, z.B. Fleischstücke bzw. Wurstbrät, sowie Teig für Backwaren, z.B. Teig auf Basis von Getreideprodukten, insbesondere Mehl, insbesondere Brotteig.

Die Erfindung stellt eine Vorrichtung und ein damit durchführbares Verfahren zur Beaufschlagung von Rohstoffen, insbesondere von Lebensmittelrohstoffen oder Lebensmitteln mit elektrischer Energie gemäß der Ansprüche bereit, mit der dadurch eine schnellere und gleichmäßigere Behandlung des Lebensmittelrohstoffs bzw. des Lebensmittels über dessen gesamtes Volumen, bzw. über dessen gesamten Querschnitt erreicht wird, dass die beabstandeten Elektroden in gegeneinander isolierte bzw. voneinander beabstandete Elektrodensegmente unterteilt sind und jeweils die Elektrodensegmente mit elektrischer Energie beaufschlagt werden, zwischen denen ein geringer Leitwert, bevorzugt der geringste Leitwert im Verhältnis zu dem Leitwert bestimmt ist, der zwischen anderen Elektrodensegmenten bestimmt ist, wobei vorzugsweise jeder Leitwert im Verhältnis zum Abstand der jeweiligen Elektrodensegmente, weiter bevorzugt im Verhältnis zum Abstand und zur Fläche der jeweiligen Elektrodensegmente als Leitfähigkeit bestimmt ist. Entsprechend werden die Elektrodensegmente jeweils paarweise nacheinander oder paarweise gleichzeitig mit elektrischer Energie beaufschlagt. Generell weist die Vorrichtung zur Behandlung von Rohstoffen zumindest zwei beabstandete Elektroden auf, die mit einer gesteuerten elektrischen Energiequelle kontaktiert sind, wobei die Elektroden jeweils von zumindest zwei elektrisch getrennten Elektrodensegmenten gebildet sind, von denen jedes gesteuert elektrisch mit der elektrischen Energiequelle verbunden ist und jedes Elektrodensegment mit einer zur Bestimmung der elektrischen Leitfähigkeit zwischen zumindest jeweils zwei Elektrodensegmenten eingerichteten Messeinrichtung verbunden ist, wobei die elektrische Energiequelle von einer Steuerungseinheit gesteuert ist und die elektrische Energiequelle gesteuert und dazu eingerichtet ist, jeweils zumindest die zwei Elektrodensegmente mit elektrischer Energie zu beaufschlagen, zwischen denen die geringste elektrische Leitfähigkeit bestimmt ist. Optional ist zumindest eine der Elektroden von zumindest zwei elektrisch getrennten Elektrodensegmenten gebildet und die andere der Elektroden kann aus einem Elektrodensegment bestehen, so dass die eine Elektrode von zumindest zwei Elektrodensegmenten gebildet ist und die andere aus einem Elektrodensegment besteht. Generell bevorzugt sind die Elektrodensegmentflächen gleich groß. Generell, insbesondere bei unterschiedlich großen Elektrodensegmentflächen, wird bevorzugt die Leitfähigkeit bestimmt, die sich aus dem Leitwert im Verhältnis zum Abstand der Elektrodensegmente und deren Flächen ergibt, als Leitwert x Elektrodensegmentfläche / Abstand der Elektrodensegmente. Generell bevorzugt sind die Elektrodensegmente eingerichtet, dass sie mit derselben vorbestimmten Kraft gegen einen Lebensmittelrohstoff angeordnet werden.

Im Unterschied zur Ausbildung eines Strompfads zwischen zwei beabstandeten Elektroden vorbekannter Vorrichtungen führt die erfindungsgemäße Vorrichtung zur Ausbildung einer Vielzahl von Strompfaden, die gesteuert dreidimensional durch den Lebensmittelrohstoff ausgebildet werden.

Aufgrund der Abhängigkeit des Leitwerts von der Temperatur des Rohstoffs werden zur Erwärmung des Rohstoffs die Elektrodensegmente vorzugsweise mit elektrischer Energie beaufschlagt, bis zwischen allen kombinatorischen Paaren von Elektrodensegmenten im Verhältnis zu deren Abstand, und bevorzugt mit einem stoffspezifischen Faktor, dieselbe elektrische Leitfähigkeit erreicht wird, wobei diese elektrische Leitfähigkeit vorzugsweise einen vorgegebenen Zielwert hat, der einer Zieltemperatur entspricht. Diese Verfahrensführung und die Einrichtung der Vorrichtung zu diesem Verfahren beruhen darauf, dass die elektrische Leitfähigkeit des Rohstoffs dessen Temperatur entspricht, so dass die Vorrichtung bevorzugt keinen Temperatursensor aufweist. Optional weist die Vorrichtung einen Temperatursensor auf, dessen Sensorfläche z.B. zwischen den Elektrodensegmenten angeordnet ist.

Für den Fall, dass der Rohstoff unterschiedliche Strukturbereiche aufweist, ist die gemessene Leitfähigkeit für jeden der Strukturbereiche ein Maß für dessen Temperatur, wobei bevorzugt die gemessene elektrische Leitfähigkeit mit einem stoffspezifischen Faktor umgerechnet wird, so dass diese errechnete elektrische Leitfähigkeit jedes Strukturbereichs eines Rohstoffs den gleichen Wert haben kann und insbesondere die Elektrodensegmente mit elektrischer Energie beaufschlagt werden, bis diese errechnete elektrische Leitfähigkeit zwischen allen kombinatorischen Paaren von Elektrodensegmenten denselben Wert erreicht, vorzugsweise den Zielwert. Entsprechend ist bei pastösen und festen Rohstoffen bevorzugt, dass die Vorrichtung eingerichtet ist, die Elektrodensegmente mit elektrischer Energie zu beaufschlagen, bis mit einem stoffspezifischen Faktor derselbe Zielwert der elektrischen Leitfähigkeit zwischen allen kombinatorischen Paaren der Elektrodensegmente erreicht wird.

Für die Zwecke der Erfindung umfasst der Begriff des Leitwerts sowohl die elektrische Leitfähigkeit für Gleichstrom als auch die Leitfähigkeit für Wechselstrom, die auch als Admittanz bezeichnet wird. Entsprechend umfasst der Begriff des Widerstands sowohl den Widerstandswert bei Gleichstrom als auch den Widerstandswert bei Wechselstrom, der auch als Impedanz bezeichnet wird. Entsprechend wird optional ein Wert für die Leitfähigkeit für Gleichstrom oder Wechselstrom stellvertretend als Leitwert bezeichnet.

Die elektrische Leitfähigkeit (der Leitwert) kann direkt mittels einer Leitwertmesseinrichtung bestimmt werden, oder als Kehrwert des Widerstands mittels einer Widerstandsmesseinrichtung.

Die Elektrodensegmente können in zwei voneinander beabstandeten, vorzugsweise parallelen Ebenen angeordnet sein und spannen zwischen sich den Querschnitt auf, in welchen ein Rohstoff angeordnet wird. Alternativ können die Elektrodensegmente in einer gemeinsamen Ebene angeordnet sein und z.B. eine Innenfläche z.B. eines Zylinders oder zumindest viereckigen Querschnitts bilden. Bevorzugt sind die Elektrodensegmente entlang eines vollständigen bzw. in sich geschlossenen Umfangs angeordnet und spannen zwischen sich einen Querschnitt auf, so dass die Elektrodensegmente den Querschnitt vollumfänglich umfassen. Die entlang der Umfangsfläche dieses Querschnitts angeordneten Elektrodensegmente bilden zwischen sich eine Behandlungskammer, deren beabstandete endständige Querschnitte eine Einlass- und eine gegenüberliegende Auslassöffnung bilden können, mit Isoliermaterial verschlossen sein können, oder ebenfalls mit Elektrodensegmenten überdeckt sein können. Ein solcher Querschnitt ist vorzugsweise kreisförmig und die umfänglich angeordneten Elektrodensegmente begrenzen zwischen sich ein zylindrisches Volumen und bilden z.B. eine endseitig geschlossene Kammer bzw. einen endseitig offenen Kanal.

Erfindungsgemäß ist die Vorrichtung eingerichtet, die Elektrodensegmente jeweils paarweise mit elektrischer Energie zu beaufschlagen, die Strom, insbesondere Wechselstrom, alternativ Gleichstrom sein kann und im Wesentlichen zu einer Erwärmung des Lebensmittels führt, und/oder Hochspannungsimpulse umfassen kann, die ein gepulstes elektrisches Feld erzeugen und zu einer zumindest teilweisen Strukturveränderung des Lebensmittels führen, z.B. zu einem teilweisen Zellaufschluss und/oder zu einer Keimreduktion. Entsprechend weist die elektrische Energiequelle eine Stromquelle, insbesondere eine Wechselstromquelle, und/oder eine Hochspannungsimpulsquelle auf.

Eine Stromquelle kann z.B. eine Leistung von 1 bis 150 kW, z.B. von 10 bis 35 kW, insbesondere von 15 bis 25 kW aufweisen. Eine Hochspannungsimpulsquelle kann z.B. eingerichtet sein, Hochspannungsimpulse mit Impulsleistungen von ca. 3-10 MW, insbesondere 5 MW, bei einer Impulsdauer von 10-30 µs, insbesondere 20 µs, bei einer Zeit von 3.000-5.000 µs zwischen den Impulsen, insbesondere mit einen Impulsabstand von ca. 4.000 µs, bzw. bei einer mittleren Leistung von ca. 15-50 kW, insbesondere ca. 25 kW zu erzeugen.

Die Elektrodensegmente stehen jeweils gesteuert mit der elektrischen Energiequelle in Kontakt, wobei die elektrische Energiequelle von einer Steuerungseinheit gesteuert ist, so dass die elektrische Energiequelle zur gesteuerten Beaufschlagung der Elektrodensegmente mit elektrischer Energie eingerichtet ist. Die Elektrodensegmente sind jeweils mit einer Messeinrichtung zur Bestimmung der elektrischen Leitfähigkeit verbunden, die auch als Leitwertmesseinrichtung bezeichnet wird, die zur Bestimmung der elektrischen Leitfähigkeit zwischen den Elektrodensegmenten eingerichtet ist. Bevorzugt ist die Leitwertmesseinrichtung eingerichtet, die elektrische Leitfähigkeit zwischen jeweils zwei Elektrodensegmenten zu bestimmen, insbesondere zwischen jedem kombinatorischen Paar der Elektrodensegmente, bevorzugt zwischen Elektrodensegmenten, die in einem gemeinsamen axialen Abschnitt der Kammer bzw. des Kanals angeordnet sind, dessen Querschnitt von den Elektrodensegmenten aufgespannt bzw. begrenzt wird. Vorzugsweise ist die Messeinrichtung zur Bestimmung der elektrischen Leitfähigkeit eingerichtet, nacheinander oder gleichzeitig die elektrische Leitfähigkeit zwischen jedem Paar von Elektrodensegmenten zu bestimmen. Erfindungsgemäß bevorzugt ist vorgesehen, dass die Steuerungseinheit die Elektrodensegmente in Abhängigkeit von der durch diese Messeinrichtung zwischen Elektrodensegmenten bestimmten elektrischen Leitfähigkeit dieselben Elektrodensegmente mit elektrischer Energie beaufschlagt, bis zwischen diesen Elektrodensegmenten ein vorgegebener Zielwert der elektrischen Leitfähigkeit erreicht ist.

Auf diese Weise wird die Abhängigkeit der mit zunehmender Temperatur zunehmenden elektrischen Leitfähigkeit eingesetzt, um im Verfahren zwischen Elektrodensegmenten durch Beaufschlagung mit elektrischer Energie eine vorgegebene Temperatur entlang jedes Strompfads zu erreichen, der zwischen jeweils zwei der Elektrodensegmente erzeugt wird. Optional werden, insbesondere nach zumindest einem Schritt der Bestimmung der elektrischen Leitfähigkeit, die Elektrodensegmente, zwischen denen die gleiche elektrische Leitfähigkeit im Verhältnis zum Abstand der Elektrodensegmente des Paars bestimmt wird, gleichzeitig mit elektrischer Energie beaufschlagt, insbesondere alle Elektrodensegmente, wenn zwischen allen kombinatorischen Paaren von Elektrodensegmenten die gleiche elektrische Leitfähigkeit im Verhältnis zum Abstand der Elektrodensegmente des Paars bestimmt ist. In dieser Ausführungsform kann die Behandlung mit elektrischer Energie beschleunigt werden. Vorzugsweise werden die Elektrodensegmente mit einer Menge elektrischer Energie beaufschlagt, die ein Bruchteil der Energie ist, die zum Erwärmen des Rohstoffs auf maximal die Siedetemperatur ausreicht oder ein Bruchteil der Energie ist, die zum Erreichen des gewünschten Aufschlussgrades ausreicht, insbesondere wenn die elektrische Energie Hochspannungsimpulse aufweist oder daraus besteht. Ein solcher Bruchteil kann maximal 90%, bevorzugt maximal 50%, bevorzugter maximal 25% oder maximal 10% der Energiemenge sein, die zum Erreichen eines Garungsgrads, der Siedetemperatur und/oder des gewünschten Zellaufschlussgrades ausreicht.

Bevorzugt ist die Steuerungseinheit eingerichtet, die Elektrodensegmente mit elektrischer Energie zu beaufschlagen, bis ein vorgegebener Zielwert der elektrischen Leitfähigkeit, der auch als Zielleitwert bezeichnet werden kann, zumindest in zwei Stufen erreicht ist, wobei jede Stufe des Werts der elektrischen Leitfähigkeit geringer als der vorgegebene Zielwert ist. Durch Einrichtung der Steuerungseinheit so, dass Elektrodensegmente mit elektrischer Energie beaufschlagt werden, bis jeweils erst eine erste Stufe des Zielwerts der elektrischen Leitfähigkeit für alle Elektrodensegmente erreicht wird, bevor die Elektrodensegmente zur Erreichung eines höheren Werts der elektrischen Leitfähigkeit mit elektrischer Energie beaufschlagt werden, wird eine gleichmäßigere Behandlung, z.B. eine Erwärmung und/oder ein Zellaufschluss bzw. Keimreduktion erreicht.

Optional kann die Steuerungseinheit eingerichtet sein, dass der Zielwert oder dessen erste oder zweite Stufe durch Beaufschlagung allein der Elektrodensegmente erreicht wird, die in einem Abstand von maximal 75%, bevorzugt maximal 50%, bevorzugter maximal 30% des von den Elektrodensegmenten aufgespannten Querschnitts angeordnet sind. In dieser Ausführungsform ist die Vorrichtung insbesondere für ein Verfahren geeignet, bei dem der Lebensmittelrohstoff in seinem Zentralbereich, der zumindest von linearen Strompfaden, die zwischen weiter als 75%, bevorzugt weiter als 50%, bevorzugter weiter als 30% des von ihnen aufgespannten Querschnitts beabstandeten Elektrodensegmenten, nicht oder nur bis zur zweiten oder ersten Stufe durchströmt bzw. erwärmt wird, z.B. zur Garung von Fleischwaren als Lebensmittelrohstoffe, bei denen ein zentraler Querschnittsbereich in geringerem Ausmaß gegart werden soll.

Weiter bevorzugt ist die Steuerungseinheit eingerichtet, die Elektrodensegmente mit elektrischer Energie zu beaufschlagen, zwischen denen die geringste elektrische Leitfähigkeit im Verhältnis zu ihrem Abstand bestimmt wurde, insbesondere bei gleicher Fläche der Elektrodensegmente. Dies kann z.B. dadurch erfolgen, dass der zwischen zwei Elektrodensegmenten bestimmte Wert für die elektrische Leitfähigkeit mit dem Abstand zwischen den Elektroden multipliziert wird.

Bevorzugt ist die Messeinrichtung zur Bestimmung der elektrischen Leitfähigkeit eine Leitwertmesseinrichtung, die gleichzeitig zur Messung mit den Elektrodensegmenten verbunden und zur Messung eingerichtet ist, während die Elektrodensegmente von der Steuerungseinheit gesteuert mit elektrischer Energie beaufschlagt werden, so dass die Steuerungseinheit den Fluss elektrischer Energie bei Erreichen eines vorgegebenen Werts für die elektrische Leitfähigkeit zwischen diesen Elektrodensegmenten unterbricht. Da die Leitwertmesseinrichtung mit allen Elektrodensegmenten verbunden ist, ist es bevorzugt, dass die Leitwertmesseinrichtung zur gleichzeitigen Bestimmung der elektrischen Leitfähigkeit (Leitwerte) zwischen allen Elektrodensegmenten, insbesondere zwischen jedem kombinatorischen Paar der Elektrodensegmente, eingerichtet ist und die Steuerungseinheit eingerichtet ist, jeweils das Paar Elektrodensegmente mit elektrischer Energie zu beaufschlagen, zwischen denen der geringste Wert für die elektrische Leitfähigkeit bestimmt ist. Insbesondere bevorzugt ist die Leitwertmesseinrichtung eingerichtet, die elektrische Leitfähigkeit für jede Kombination von zumindest zwei Elektrodensegmenten zu bestimmen.

Die erfindungsgemäße Vorrichtung erlaubt einerseits ein schonendes Beaufschlagen des Rohstoffs, insbesondere des Lebensmittels, mit elektrischer Energie, der in dem zwischen den Elektrodensegmenten aufgespannten Querschnitt geordnet ist, z.B. zu dessen gleichmäßiger Erwärmung und/oder teilweisem Zellaufschluss bzw. Keimreduktion. Dieses wird darauf zurückgeführt, dass die Beaufschlagung der Elektrodensegmente mit elektrischer Energie durch die Steuerungseinheit jeweils so, dass ein vorgegebener Zielwert für die elektrische Leitfähigkeit (Zielleitwert), insbesondere zunächst eine Stufe eines Zielleitwerts, die einen geringeren Leitwert hat als der Zielleitwert, die Ausbildung von im Wesentlichen einem Strompfad durch die Lebensmittelmasse verringert und eine Vielzahl von Stromleitpfaden durch unterschiedliche Abschnitte des Querschnitts des Lebensmittels erzeugt.

Zusätzlich oder alternativ zu der Einrichtung der Steuerungseinheit, bzw. zur Steuerung der elektrischen Energiequelle durch die Steuerungseinheit so, dass die Elektrodensegmente mit elektrischer Energie beaufschlagt werden, zwischen denen die Messeinrichtung die geringste elektrische Leitfähigkeit bestimmt hat, können Elektrodensegmente, insbesondere einander gegenüberliegende Elektrodensegmente, ohne Abhängigkeit vom Wert der elektrischen Leitfähigkeit mit elektrischer Energie beaufschlagt werden. In dieser Ausführungsform hat die elektrische Energie vorzugsweise eine Menge, die maximal zur Erwärmung des Rohstoffs auf Siedetemperatur ausreicht, insbesondere eine Menge, die maximal 90 %, bevorzugt maximal 50 %, bevorzugter maximal 25 %, oder maximal 10 % der Energiemenge ist, die eine Erwärmung auf Siedetemperatur bewirkt.

Der geringste Leitwert bzw. Wert der Leitfähigkeit, kann ein Leitwert sein, der maximal 90 %, bevorzugt maximal 50 %, bevorzugter maximal 25 %, oder maximal 10 % des Zielleitwertes, oder von dessen Stufe beträgt.

In einer ersten Ausführungsform bilden die Elektrodensegmente zumindest einen Teil der Oberfläche eines Behälters oder Kanals, in den Lebensmittel eingebracht werden, beispielsweise zwei gegenüberliegende beabstandete Wandabschnitte. Bevorzugt bilden die Elektrodensegmente vollständig die Innenflächen eines Behälters oder Kanals, die sich in einem Abstand um die Längsachse des Behälters oder Kanals erstrecken. Wenn die beabstandeten, stirnseitigen Querschnitte offen sind und eine Einlassöffnung und eine gegenüberliegende Auslassöffnung zum Durchtritt von Lebensmittel bilden, umfassen die Elektrodensegmente einen Kanal. In dieser Ausführungsform ist die Vorrichtung insbesondere für ein Verfahren zur kontinuierlichen Herstellung bzw. Erwärmung von Lebensmitteln geeignet, die entlang der Längsachse des Behälters oder des Kanals durch die Vorrichtung bewegt werden.

Für die satzweise Herstellung von Lebensmitteln bilden die Elektrodensegmente in einer weiteren Ausführungsform die anteilige oder vollständige Innenoberfläche eines Behälters, so dass ein in den Behälter eingefülltes Lebensmittel zumindest von Elektrodensegmenten in zwei beabstandeten Ebenen, bevorzugt von allen Seiten von Elektrodensegmenten kontaktiert wird, so dass die Elektrodensegmente in dieser Ausführungsform vollständig das Innenvolumen des Behälters umgrenzen.

Weiter optional können die Elektrodensegmente jeder Ausführungsform drehbar gelagert sein und z.B. als Rollen ausgebildet sein. Solche drehbar gelagerten Elektrodensegmente können eine Kugelform aufweisen oder eine Walzenform, vorzugsweise mit konvexer Oberfläche, und z.B. um eine Achse drehbar sein, die tangential zu dem von den Elektrodensegmenten aufgespannten Querschnitt bzw. parallel zu der von den Elektrodensegmenten begrenzten Umfangsfläche angeordnet ist.

Die Elektrodensegmente sind voneinander dadurch elektrisch isoliert, dass sie voneinander beabstandet sind. Zwischen den Elektrodensegmenten kann ein Isoliermaterial angeordnet sein, insbesondere ein für Lebensmittel geeigneter Kunststoff oder Keramik. Alternativ können die Elektrodensegmente auf einem Träger aus Isolator angeordnet sein und voneinander beabstandet sein.

In bevorzugter Ausführungsform spannen die Elektrodensegmente eine Umfangsfläche mit kreisförmigem Querschnitt auf, wobei die Umfangsfläche jeweils stirnseitig offene Querschnitte aufweist, von denen die eine eine Einlassöffnung und die andere eine Auslassöffnung bildet, insbesondere für die kontinuierliche Beaufschlagung von Lebensmitteln mit elektrischer Energie. In einer Ausführungsform, die insbesondere für die kontinuierliche Beaufschlagung von Lebensmitteln mit elektrischer Energie geeignet ist, ist eine erste Gruppe von Elektrodensegmenten in einem ersten axialen Abschnitt entlang des Umfangs eines Kanals angeordnet und zumindest eine zweite Gruppe von Elektrodensegmenten in einem beabstandeten zweiten axialen Abschnitt des entlang des Umfangs des Kanals angeordnet, wobei bevorzugt die erste und die zweite Gruppe von Elektrodensegmenten denselben Querschnitt umfasst. Die Steuerungseinheit ist vorzugsweise eingerichtet, die erste Gruppe von Elektrodensegmenten bis zum Erreichen einer ersten Stufe eines Zielleitwerts mittels der Energiequelle mit elektrischer Energie zu beaufschlagen, insbesondere zwischen allen Elektrodensegmenten der ersten Gruppe, und ist eingerichtet, die zweite Gruppe von Elektrodensegmenten mittels der Energiequelle bis zum Erreichen einer zweiten Stufe des Zielleitwerts mit elektrischer Energie zu beaufschlagen, die einen höheren Leitwert als die erste Stufe hat. Mit der axial beabstandeten Anordnung einer ersten und einer zweiten Gruppe von Elektrodensegmenten, die jeweils einen Abschnitt eines gemeinsamen Kanals umfassen, kann mittels der gesteuerten Beaufschlagung mit elektrischer Energie bis zum Erreichen einer ersten und einer höheren zweiten Stufe eines Zielleitwerts eine über den Querschnitt gleichmäßige stufenweise Behandlung des Lebensmittels erreicht werden, insbesondere eine gleichmäßige stufenweise Erwärmung und/oder ein gleichmäßiger stufenweiser Zellaufschluss und/oder eine gleichmäßige stufenweise Keimreduktion.

Weiter bevorzugt weist die Vorrichtung eine Einrichtung zur Messung des Zellaufschlussgrads auf, die z.B. eingerichtet sein kann, eine elektrische Energiequelle, die Hochspannungsimpulse erzeugt, zu steuern, insbesondere bis zum Erreichen eines vorgegebenen Zellaufschlussgrads zur Erzeugung von Hochspannungsimpulsen zu steuern. Vorzugsweise ist die Einrichtung zur Messung des Zellaufschlussgrads ein Impedanzspektrometer, das z.B. mit zumindest zwei oder allen Elektrodensegmenten, die zwischen sich einen Querschnitt aufspannen, in Kontakt steht.

Entsprechend weist das Verfahren bevorzugt den Schritt der Messung des Zellaufschlussgrads auf und weiter bevorzugt den Schritt des Steuerns der Energiequelle für Hochspannungsimpulse abhängig von dem gemessenen Zellaufschlussgrad, insbesondere zur Erzeugung von Hochspannungsimpulsen bis ein vorgegebener Zellaufschlussgrad erreicht ist. Bevorzugt erfolgt die Messung des Zellaufschlussgrads mittels Impedanzspektroskopie. Optional ist die Steuereinrichtung eingerichtet, abhängig von Messwerten der Impedanzspektroskopie die elektrische Energiequelle zu steuern, insbesondere zur Erzeugung von Hochspannungsimpulsen anzusteuern, bis ein vorgegebener Wert mittels der Impedanzspektroskopie gemessen wird. In dieser Ausführungsform ist die Vorrichtung bzw. das damit durchgeführte Verfahren zur Behandlung von Lebensmittelrohstoffen eingerichtet, bis ein vorgegebener Zellaufschlussgrad erreicht ist, der dem vorgegebenen Wert entspricht, der mittels Impedanzspektroskopie gemessen wird.

Vorzugsweise sind die dem Lebensmittel zugewandten Oberflächen der Elektrodensegmente konvex, um die Anhaftung von Lebensmitteln bzw. einer die Lebensmittel umgebenden Hülle zu verringern.

Weiter optional können die Elektrodensegmente mit einer Kühleinrichtung versehen sein, insbesondere innen liegende Kühlkanäle zum Durchtritt eines Kühlmediums aufweisen, die mit einer Quelle für Kühlmedium verbunden sind.

In einer Ausführungsform, die insbesondere für ein Verfahren zur kontinuierlichen Herstellung von Fleisch- und Wurstwaren geeignet ist, die wahlweise in einer Hülle enthalten sein können, weist die Vorrichtung auf Seiten der Einlassöffnung, die von den Elektrodensegmenten aufgespannt ist, eine Einrichtung zur Zuführung des Lebensmittels auf. Im Anschluss an die der Einlassöffnung gegenüberliegenden Auslassöffnung weist die Vorrichtung vorzugsweise eine Transporteinrichtung für das zwischen den Elektrodensegmenten hindurchgetretene Lebensmittel auf, beispielsweise ein Transportband. Optional können die Elektrodensegmente jeder Ausführungsform verschieblich gelagert sein, z.B. senkrecht zu dem von den Elektrodensegmenten aufgespannten Umfang verschieblich. Dabei können die Elektrodensegmente z.B. von Tragstangen gehalten sein, die längs ihrer Längsachse gegen die Längsachse des von den Elektrodensegmenten aufgespannten Umfangs verschieblich sind. Bei einem Verfahren zur Herstellung von Lebensmitteln mit dieser Ausführungsform wird der Lebensmittelrohstoff durch den von den Elektrodensegmenten aufgespannten Kanal gefördert, vorzugsweise kontinuierlich. Bevorzugt sind die Elektrodensegmente eingerichtet, dass sie mit derselben vorbestimmten Kraft gegen einen Lebensmittelrohstoff angeordnet werden. Optional sind die Elektrodensegmente mit einem Lagesensor und/oder Kraftsensor versehen, z.B. angeordnet an Tragstangen, die die Elektrodensegmente halten. Die Tragstangen können linear geführt verschieblich sein und sind bevorzugt mit einem Lagesensor oder Positionssensor versehen, der mit der Messeinrichtung verbunden ist, die z.B. eingerichtet ist, aus Signalen der Lagesensoren oder Positionssensoren die Abstände der Elektrodensegmente voneinander zu bestimmen und diese Abstände bei der Bestimmung der elektrischen Leitfähigkeit im Verhältnis zu deren Abstand zu verwenden.

Der Positionssensor kann auch eine Detektionseinrichtung zur Bestimmung der Position der Elektrodensegmente sein, z.B. auf Basis einer Lasermesseinrichtung oder einer Ultraschalleinrichtung. Dies ist z.B. bevorzugt, wenn die Elektrodensegmente relativ zueinander beweglich sind, z.B. an geführten verschieblichen Tragstangen oder an einem verformbaren Isolator angeordnet. Ein verformbarer Isolator kann z.B. eine Kunststofffolie, z.B. aus Silikonpolymer sein, auf dessen einer Oberfläche die Elektrodensegmente angeordnet sind. Bevorzugt ist der verformbare Isolator verschließbar, z.B. mittels eines Verschlusses zu einer Tütenform verschließbar, oder durch Überlappen des Isolators zumindest in Randbereichen. Besonders bevorzugt ist der verformbare Isolator evakuierbar, z.B. mit einer Unterdruckquelle verbindbar, so dass durch Evakuieren der verformbare Isolator mit den daran angeordneten Elektrodensegmenten an den Rohstoff angeordnet wird. In dieser Ausführungsform ist der verformbare Isolator mit den auf einer Oberfläche angeordneten Elektrodensegmenten bevorzugt in einem Isoliergehäuse angeordnet, wenn die Elektrodensegmente mit elektrischer Energie beaufschlagt werden.

Weiter optional können Elektrodensegmente auf einem gegen die Längsachse des aufgespannten Querschnitts verschieblichen Träger angeordnet sein, beispielsweise auf einer ebenen oder gebogenen, insbesondere konkaven Trägerplatte, so dass der zwischen den Elektrodensegmenten aufgespannte Querschnitt durch Verschieben des Trägers veränderlich ist.

Optional weist die Vorrichtung eine optische Detektionseinrichtung auf, die den Rohstoff abbildet und Bereiche unterschiedlicher Struktur des Rohstoffs bestimmt. Eine solche optische Detektionseinrichtung kann z.B. eine optische Kamera aufweisen, die eingerichtet ist, den Rohstoff abzubilden, oder eine Röntgendurchleuchtungseinrichtung, die eingerichtet ist, den Rohstoff zu durchleuchten und abzubilden.

Die Detektionseinrichtung weist bevorzugt eine Auswertungseinheit auf, die zur automatischen Erkennung von Strukturbereichen und zur Zuordnung eines stoffspezifischen Faktors der elektrischen Leitfähigkeit zu jedem erkannten Strukturbereich eingerichtet ist. Stoffspezifische Faktoren der elektrischen Leitfähigkeit bilden die temperaturabhängig unterschiedlichen elektrischen Leitfähigkeiten von Strukturbereichen ab, so dass eine gemessene elektrische Leitfähigkeit mittels des stoffspezifischen Faktors der Temperatur des Strukturbereichs zugeordnet werden kann. Bevorzugt ist die Auswertungseinheit mit der Steuerungseinheit verbunden und die Steuerungseinheit ist eingerichtet, die zwischen zwei Elektrodensegmenten gemessene elektrische Leitfähigkeit, insbesondere in Bezug zum Abstand zwischen den Elektrodensegmenten, zwischen denen die elektrische Leitfähigkeit bestimmt ist, mit dem stoffspezifischen Faktor zu einem Steuersignal zu verarbeiten, mit welchem die elektrische Energiequelle zur Beaufschlagung der Elektrodensegmente gesteuert wird. Bevorzugt ist der Bezug der gemessenen elektrischen Leitfähigkeit zum Abstand der Elektrodensegmente das Multiplikationsprodukt der gemessenen elektrischen Leitfähigkeit mit dem Abstand der betreffenden Elektrodensegemente.

Optional weist die Vorrichtung eine Dichtemesseinrichtung auf, die eingerichtet ist, die Dichte des Rohstoffs zu bestimmen, insbesondere des Rohstoffs, der zwischen Elektrodensegmenten angeordnet ist. Eine Dichtemesseinrichtung kann an dem von den Elektrodensegmenten aufgespannten Querschnitt angeordnet sein. Die Dichtemesseinrichtung kann eine volumetrische, optische, akustische oder radiometrische Dichtemesseinrichtung sein, z.B. ein Lagefühler, ein Ultraschall-Dichtemesser oder eine Durchleuchtungseinrichtung oder ein Infrarot-Dichtemesser. Die Dichtemesseinrichtung ist zur Übermittlung von Daten zur Dichte mit der Steuerungseinheit verbunden und die Steuerungseinheit ist eingerichtet, Elektrodensegmente in Abhängigkeit von den Daten zur Dichte mit elektrischer Energie zu beaufschlagen. Z.B. ist die Steuerungseinheit eingerichtet, die zwischen zwei Elektrodensegmenten gemessene elektrische Leitfähigkeit, insbesondere in Bezug zum Abstand zwischen den Elektrodensegmenten, zwischen denen die elektrische Leitfähigkeit bestimmt ist, mit den Daten zur Dichte zu einem Steuersignal zu verarbeiten, mit welchem die elektrische Energiequelle zur Beaufschlagung der Elektrodensegmente gesteuert wird.

Ein stoffspezifischer Faktor der elektrischen Leitfähigkeit ist vorzugsweise vorbestimmt, z.B. durch Messung der elektrischen Leitfähigkeit isolierter homogener Strukturbereiche eines Rohstoffs zwischen Elektrodensegmenten in Abhängigkeit von der Beaufschlagung der Elektrodensegmente mit elektrischer Energie, insbesondere mit Zuordnung des stoffspezifischen Faktors zur Temperatur des Rohstoffs. In dieser Ausführungsform wird eine gleichmäßige Behandlung eines Rohstoffs möglich, der unterschiedliche Strukturbereiche mit unterschiedlicher temperaturabhängiger elektrischer Leitfähigkeit aufweist, da die Elektrodensegmente, zwischen denen die geringste elektrische Leitfähigkeit bestimmt ist, insbesondere die im Verhältnis zu ihrem Abstand geringste elektrische Leitfähigkeit bestimmt ist, die durch den stoffspezifischen Faktor vergleichbar sind, bzw. die durch den stoffspezifischen Faktor umgerechnet der gleichen Temperatur des Rohstoffs entsprechen.

Die Vorrichtung kann als Garungsvorrichtung und/oder als Auftauvorrichtung Verwendung finden, insbesondere für rohe, vorgegarte und/oder gefrorene Lebensmittelrohstoffe.

Optional weist die Vorrichtung eine Bräunungseinrichtung auf, die vor und/oder nach den Elektrodensegmenten angeordnet und eingerichtet ist, die Oberfläche des Lebensmittelrohstoffs vor und/oder nach Beaufschlagung mit elektrischer Energie oberflächlich zu erwärmen, insbesondere zu erhitzen, bis eine Bräunungsreaktion eintritt. Eine Bräunungseinrichtung kann beheizbare Elemente aufweisen, die gegen die Oberfläche des Lebensmittelrohstoffs gerichtet sind und diese kontaktieren, z.B. beheizte Kontaktflächen, oder in einem Abstand angeordnet sind und diese erwärmen, z.B. mittels Strahlung in Ausführung der Bräunungseinrichtung als Wärmestrahler. Alternativ oder zusätzlich kann die Bräunungseinrichtung als Zuführeinrichtung für ein Wärmeübertragerfluid ausgeführt sein, um durch Kontaktieren mit dem Wärmeübertragerfluid die Oberfläche des Lebensmittelrohstoffs zu bräunen. Diese Zuführeinrichtung kann z.B. ein Heißluftgebläse oder ein Ofen sein und heiße Luft zuführen, eine Zuführeinrichtung für heißes Wasser oder heißes Fett auf den Lebensmittelrohstoff, und/oder ein Brenner sein, dessen Flamme z.B. auf den Lebensmittelrohstoff gerichtet ist. Die Bräunungseinrichtung kann als Heizeinrichtung für Elektrodensegmente ausgebildet sein, so dass die Elektrodensegmente die Oberfläche des Lebensmittelrohstoffs durch Kontakt oberflächlich bräunen.

### Genaue Beschreibung der Erfindung

Die Erfindung wird nun genauer mit Bezug auf die Figuren beschrieben, die schematisch
- in Figur 1 einen Schnitt durch die erfindungsgemäße Vorrichtung,
- in Figur 2 eine Vorrichtung, die insbesondere für ein kontinuierliches Verfahren geeignet ist
- in Figur 3 ein Beispiel für eine Anordnung von Elektrodensegmenten,
- in Figur 4 eine aufgeklappte Darstellung einer Anordnung der Elektrodensegmente,
- in Figur 5 eine weitere Ausführungsform der Anordnung der Elektrodensegmente im Schnitt und
- in Figur 6 eine Ausführungsform, in perspektivischer Darstellung zeigen.

In den Figuren bezeichnen gleiche Bezugsziffern funktionsgleiche Elemente. Für die Zwecke der Erfindung nennt die Beschreibung der Einrichtung der Vorrichtung gleichzeitig die Schritte des Verfahrens, das mit der Vorrichtung durchführbar ist. Die Bezugnahme auf eine Stromquelle umfasst eine Wechselstromquelle und alternativ eine Gleichstromquelle und erfolgt stellvertretend für eine elektrische Energiequelle, die alternativ eine Hochspannungsimpulsquelle sein kann oder zusätzlich eine Hochspannungsimpulsquelle umfassen kann.

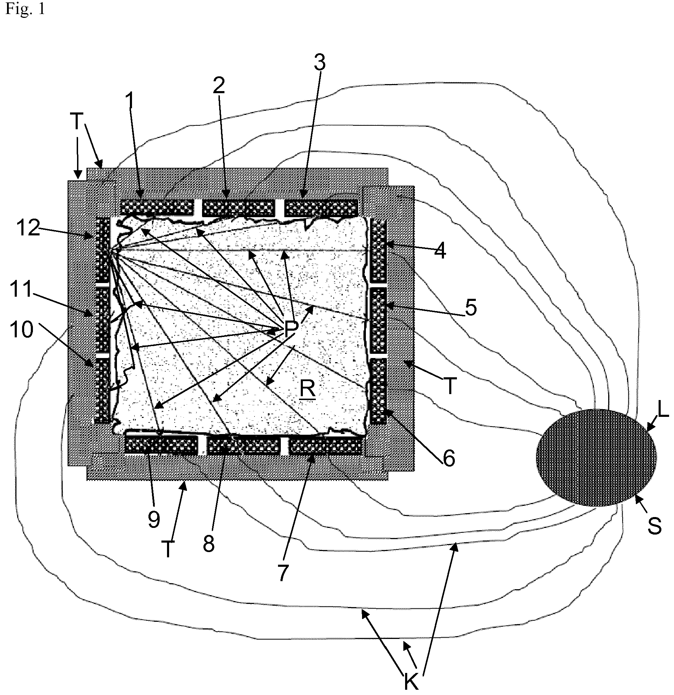

Die Figur 1 zeigt schematisch die Vorrichtung in dem Querschnitt, der von stellvertretend genannten Elektrodensegmenten 1-12 aufgespannt ist, wobei in dem Querschnitt ein Rohstoff als zu behandelndes Lebensmittel R angeordnet ist. Zur elektrischen Isolierung voneinander sind die Elektrodensegmente 1-12 voneinander beabstandet und auf einem Träger T aus Isoliermaterial angeordnet. Das Isoliermaterial des Trägers T kann sich in die Zwischenräume zwischen den Elektroden 1-12 erstrecken, so dass bevorzugt die Elektrodensegmente 1-12 auf einem Träger T angeordnet sind und eine kontinuierliche Oberfläche von den Elektrodensegmenten 1-12 und dem zwischen diesen angeordnetem Material des Trägers T gebildet wird.

Die Elektrodensegmente 1-12 sind jeweils mittels Leitungen mit einer Stromquelle S verbunden, die eingerichtet ist, die Elektrodensegmente 1-12 gesteuert mit Strom zu beaufschlagen.

Überdies ist jedes Elektrodensegment 1-12 mit einer Leitwertmesseinrichtung L verbunden, die eingerichtet ist, die Werte der elektrischen Leitfähigkeit des in dem zwischen den Elektrodensegmenten 1-12 aufgespannten Querschnitt angeordneten Lebensmittels R zwischen den Elektrodensegmenten 1-12 zu bestimmen, insbesondere zwischen jeweils zwei der Elektrodensegmente 1-12. Die Leitwertmesseinrichtung L kann generell mittels Leitungen mit den Elektrodensegmenten 1-12 verbunden sein, die zusätzlich zu den Leitungen K vorhanden sind, mittels derer die Stromquelle S die Elektrodensegmente 1-12 mit Strom versorgt. Alternativ kann die Leitwertmesseinrichtung L generell mittels derselben Leitungen K mit den Elektrodensegmenten 1-12 verbunden sein, mit denen die Stromquelle S mit den Elektrodensegmenten 1-12 verbunden ist. Die Leitwertmesseinrichtung ist z.B. dadurch eine zur Bestimmung der Leitfähigkeit eingerichtete Messeinrichtung, dass die Messwerte in Bezug zur Elektrodensegmentfläche und zum Abstand der Elektrodensegmente gesetzt werden, z.B. als Messwert des Leitwerts x Elektrodensegmentfläche / Abstand der Elektrodensegmente.

In Figur 1 sind schematisch mögliche Strompfade P gezeigt, bzw. die Elektrodensegmente 1-12 sind durch Strompfade P verbunden, die dadurch erzeugt werden, dass die Elektrodensegmente 1-12 paarweise gleichzeitig von der Stromquelle S gesteuert mit Strom entgegengesetzter Polarität beaufschlagt werden. Eine mögliche zeitliche Abfolge der Beaufschlagung von Elektrodensegmenten 1-12 ist durch die Vielzahl der Strompfade P angedeutet, da diese zeitlich nacheinander dadurch erzeugt werden, dass die jeweils einen Strompfad P ausbildenden Elektrodensegmente 1-12 durch die Stromquelle S gesteuert mit Strom entgegengesetzter Polarität beaufschlagt werden, z.B. die Elektrodensegmente 1-12 paarweise nacheinander, durch die in der Figur von oben nach unten angeordneten Strompfade P miteinander verbunden sind.

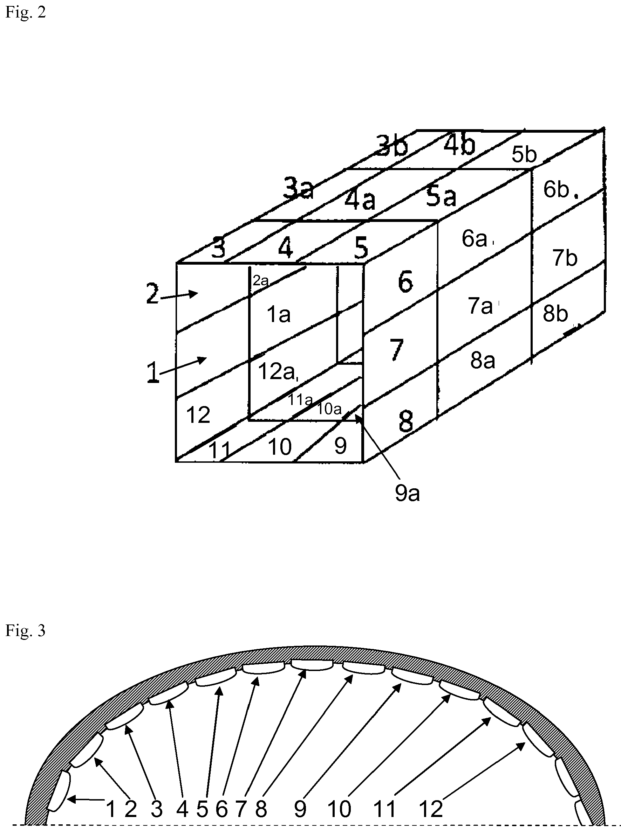

Die Figur 2 zeigt die Anordnung von Elektrodensegmenten 1-12, 1a-12a, 1b-12b, soweit diese in perspektivischer Darstellung sichtbar sind, die zwischen sich einen rechteckigen Querschnitt aufspannen und vollständig die Umfangsfläche für diesen Querschnitt bilden. Die stirnseitigen Querschnitte können, wie in Figur 2 dargestellt, endseitig offen sein und eine Einlassöffnung und gegenüberliegend eine Auslassöffnung für den Durchtritt von Lebensmitteln bilden, insbesondere für ein kontinuierliches Verfahren zur Herstellung von Lebensmitteln mit dem Schritt der Erwärmung des Lebensmittels beim kontinuierlichen Durchtritt durch den Querschnitt, der von den Elektrodensegmenten 1-12, 1a-12a, 1b-12b aufgespannt wird. Entsprechend einer bevorzugten Ausführungsform wird der Querschnitt durch nebeneinander angeordnete beabstandete Elektrodensegmente 1-12 vollständig ausgebildet, wobei sich die Elektrodensegmente 1-12 senkrecht zum Querschnitt erstrecken und besonders bevorzugt die Elektroden auch entlang der Achse senkrecht zum aufgespannten Querschnitt jeweils von Elektrodensegmenten 1a-12a bzw. 1b-12b gebildet sind. Dabei bilden die Elektrodensegmente 1-12 eine erste Gruppe von Elektrodensegmenten und die Elektrodensegmente 1a-12a eine zweite Gruppe von Elektrodensegmenten, sowie die Elektrodensegmente 1b-12b eine weitere zweite Gruppe von Elektrodensegmenten, wobei jede Gruppe von Elektrodensegmenten 1-12, 1a-12a, bzw. 1b-12b in einem axialen Abschnitt um denselben Querschnitt bzw. denselben Kanal angeordnet ist.

Figur 3 zeigt im Schnitt einen Anteil eines Kanals, der von beabstandeten Elektrodensegmenten 1 bis 12 aufgespannt wird. Die Elektrodensegmente sind mit einer Messeinrichtung zur Leitfähigkeitsmessung und einer elektrischen Energiequelle verbunden, die von einer Steuerungseinheit gesteuert ist, jeweils die Elektrodensegmente mit Energie zu beaufschlagen, zwischen denen der geringste Leitwert in Bezug auf die Elektrodensegmentflächen und deren Abstand bestimmt wurde.

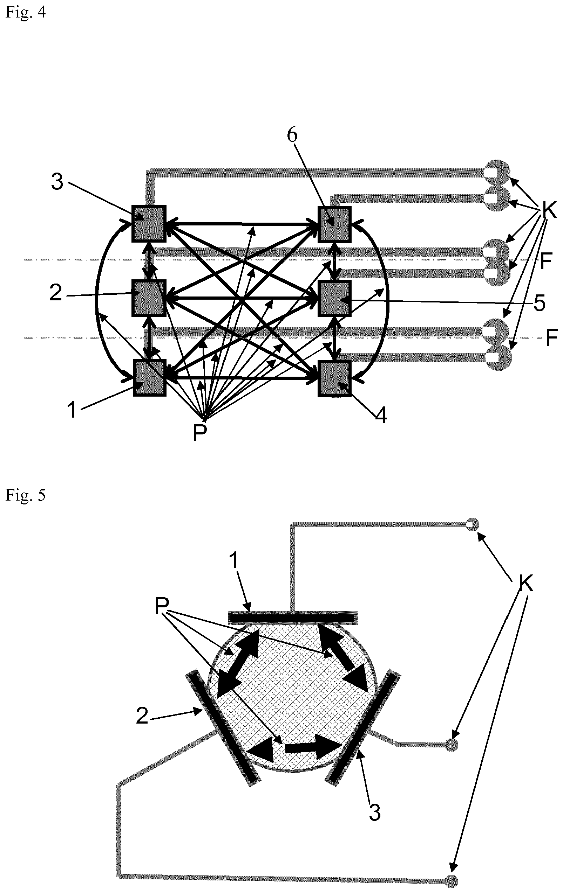

Figur 4 zeigt in einer entlang der Faltlinien F aufgeklappten Darstellung die Elektrodensegmente 1 bis 6, die zwischen sich einen Querschnitt eines Kanals umfassen. Die Vielzahl der Strompfade P, die durch die Beaufschlagung jeweils der Elektrodensegmente erzeugt wird, zwischen denen die geringste Leitfähigkeit gemessen wird, führt zu einer gleichmäßigen Erwärmung des zwischen den Elektrodensegmenten angeordneten Lebensmittelrohstoffs.

Figur 5 zeigt eine Ausführungsform, bei der eine Elektrode aus einem Segment 1 gebildet ist und die andere Elektrode in 2 Segmente 2, 3 geteilt ist, so dass die Vorrichtung insgesamt drei Elektrodensegmente 1, 2, 3 aufweist, von denen diejenigen mit elektrischer Energie beaufschlagt werden, zwischen denen die geringste Leitfähigkeit gemessen wird. Die angedeuteten Strompfade P deuten an, dass ein an den Elektroden anliegender Lebensmittelrohstoff zumindest im Randbereich homogen erwärmt wird. In Figuren 4 und 5 sind elektrische Kontakte K zum Anschluß der elektrischen Energiequelle jeweils nach rechts herausgeführt.

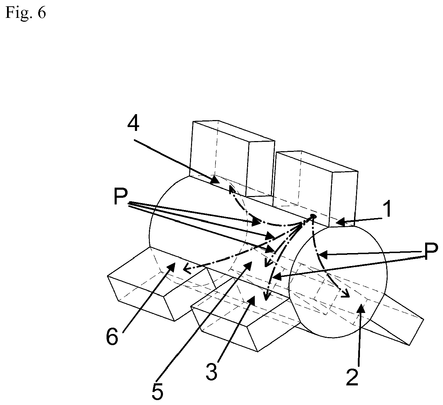

Figur 6 zeigt schematisch insgesamt sechs Elektrodensegmente 1-6, von denen jeweils drei in axialen Abschnitten eines zylindrischen Kanals angeordnet sind. Die Elektrodensegmente 1-6 können wie gezeigt mit gleichem radialen Versatz angeordnet sein oder alternativ mit Versatz zwischen den Elektrodensegmenten 1-3 bzw.4-6, die in einem axialen Abschnitt des Kanals angeordnet sind. Bevorzugt sind die Elektrodensegmente 1-3 bzw. 4-6, die in einem axialen Abschnitt angeordnet sind, jeweils im gleichen Abstand zueinander angeordnet. Die möglichen Strompfade P sind beispielhaft für die Kombinationen eines Elektrodensegments 1 gezeigt.

In den Figuren wird deutlich, dass generell durch die Ausbildung einer bzw. jeder Elektrode als zumindest 2 Segmente, die voneinander beabstandet sind und die Steuerungseinheit eingerichtet ist, unabhängig voneinander die Elektrodensegmente mit Energie zu beaufschlagen, zwischen denen die geringste elektrische Leitfähigkeit gemessen wird, eine Vielzahl von Strompfaden durch den Rohstoff gelegt wird und trotz der Leitfähigkeitsänderung durch die Erwärmung ein gleichmäßiger Energieeintrag zur Erwärmung erreicht wird.Beispiel 1: Herstellung von Fleisch- und Wurstwaren Eine erfindungsgemäße Vorrichtung, die 12 und in bevorzugter Variante 24 oder 48 Elektrodensegmente aufwies, von denen jeweils 6 bzw. 12 oder 24 aneinander angrenzend um einen gemeinsamen kreisförmigen Querschnitt in jeweils einem axialen Abschnitt angeordnet waren und einen beidseitig offenen Zylinder bildeten, wurde zur Erwärmung von Fleischstücken oder Wurstbrät, die jeweils in einer Hülle mit kreisförmigem Querschnitt enthalten waren, verwendet. Die Elektrodensegmente bildeten entsprechend eine erste und eine axial beabstandete zweite Gruppe von Elektrodensegmenten. Die Elektrodensegmente waren in jeweils zwei Reihen entsprechend ihres axialen Abstands an zwei halbschalenförmigen Trägern angeordnet, die gegeneinander geschwenkt werden konnten, um den kreisförmigen Querschnitt zu öffnet, die umhüllten Lebensmittel einzulegen und zu schließen. Die jeweils stirnseitigen Querschnitte waren entweder mit Isolator überdeckt oder mit Elektrodensegmenten.

Die Elektrodensegmente waren mittels Leitungen mit einer Stromquelle verbunden, die die Elektrodensegmente in Abhängigkeit von einem zwischen einem Paar Elektrodensegmente gemessenen Leitwert paarweise mit Strom beaufschlagte. Die Elektrodensegmente waren jeweils mittels einer Leitung mit der Stromquelle verbunden. Die Leitungen waren auch mit einer Leitwertmesseinrichtung verbunden, die eingerichtet war, den Leitwert zwischen jeweils zwei Elektrodensegmenten zu bestimmen und bevorzugt in Bezug zur Fläche der Elektrodensegmente und deren Abstand zu setzen. Die Leitwertmesseinrichtung war mittels einer Steuerungseinheit mit der Stromquelle gekoppelt, so dass die Stromquelle in Abhängigkeit von den Leitwerten, die die Leitwertmesseinrichtung erzeugte, die Elektrodensegmente jeweils paarweise mit Strom beaufschlagte, zwischen denen der geringste Leitwert gemessen wurde. Alternativ wurden jeweils die Elektrodensegmente paarweise mit Strom beaufschlagt, zwischen denen der geringste als Produkt aus dem Abstand der Elektrodensegmente und dem zwischen diesen gemessene Leitwert errechnete Leitwert bestimmt wurde.

Die Beaufschlagung der Elektrodensegmente mit Strom erfolgte dabei jeweils bis zum Erreichen eines vorgegebenen Leitwerts, bis dieser Leitwert bei allen Paaren von Elektrodensegmenten durch die Leitwertmesseinrichtung bestimmt wurde.

Alternativ war die Stromquelle so eingerichtet, dass sie die Elektrodensegmente der ersten und der zweiten Gruppe mit Strom beaufschlagte bis für diese eine vorgegebene erste Stufe des Zielleitwerts erreicht war. Diese erste Stufe des Zielleitwerts konnte beispielsweise 10 bis 80%, bevorzugt 20 bis 50% des vorbestimmten Zielleitwerts betragen. Erst nach Strombeaufschlagung von Elektrodensegmenten der ersten und der zweiten Gruppe jeweils paarweise bis zum Erreichen der ersten Stufe des Zielleitwerts zwischen allen Paaren der Elektrodensegmente wurden anschließend die Elektrodensegmente jeweils paarweise mit Strom beaufschlagt, bis der Zielleitwert, oder eine zweite höhere Stufe des Zielleitwerts bestimmt wurde. Auf diese Weise wurde eine gleichmäßige und zügige Erwärmung des im Querschnitt zwischen den Elektrodensegmenten angeordneten Lebensmittel erreicht.

### Beispiel 2: kontinuierliche Herstellung eines Lebensmittels

Für die kontinuierliche Herstellung eines Lebensmittels durch Erwärmung wurde eine Vorrichtung entsprechend Beispiel 1 verwendet, bei der die von den Elektrodensegmenten aufgespannten endständigen Querschnitte offen waren und eine Einlassöffnung und gegenüberliegende Auslassöffnung bildeten. Als Lebensmittel wurde Wurstbrät in einer Hülle kontinuierlich durch die Einlassöffnung transportiert und nach Durchtritt durch den von den Elektrodensegmenten aufgespannten Querschnitt aus der Auslassöffnung austreten gelassen. Bei dieser Ausführungsform ist es bevorzugt, dass Elektrodensegmente in zumindest zwei, vorzugsweise zumindest drei axial beabstandeten Gruppen von Elektrodensegmenten angeordnet sind, die entlang einer gemeinsamen Achse jeweils denselben Querschnitt aufspannen. Eine solche Vorrichtung entsprach insofern der Anordnung von Elektrodensegmenten von Figur 2, als axial beabstandete Elektrodensegmente 1-12, 1a-12a und 1b-12b jeweils in einem axialen Abschnitt einen geschlossenen Umfang bilden und einen durchgängigen Querschnitt aufspannen, bevorzugt einen kreisförmigen Querschnitt.

Entsprechend der besonders bevorzugten Ausführungsform war die Stromquelle optional eingerichtet, die in einem ersten axialen Abschnitt angeordnete erste Gruppe von Elektrodensegmenten 1-12, wie in Figur 2 gezeigt, gesteuert mit Strom zu beaufschlagen, dass in dem ersten axialen Abschnitt eine erste Stufe des Zielleitwerts erreicht wurde, und die benachbarte zweite Gruppe von Elektrodensegmenten 1a-12a, die den benachbarten axialen Abschnitt des Kanals umfasst, jeweils mit Strom beaufschlagt wurden, bis eine zweite höhere Stufe des Zielleitwerts zwischen den Elektrodensegmenten der zweiten Gruppe bestimmt wurde. Die Elektrodensegmente der weiteren zweiten Gruppe 1b-12b des benachbarten axialen Abschnitts wurde entsprechend gesteuert mit Strom beaufschlagt, bis der Zielleitwert zwischen diesen Elektrodensegmenten erreicht war.

Auch in diesem Beispiel hat sich gezeigt, dass die erfindungsgemäße Vorrichtung eine schnelle und gleichmäßige so wie schonende Erwärmung eines Lebensmittels über dessen gesamten Querschnitt erlaubt.

### Beispiel 3: Behandlung eines stückigen Rohstoffs

Als Beispiel für einen Rohstoff mit unterschiedlichen Strukturbereichen wurde ein Fleischstück verwendet, das einen Bereich Bindegewebe, einen Bereich Muskelfleisch und eine Fettschicht als oberflächlichen Bereich aufwies.

Zur Bestimmung stoffspezifischer Faktoren der elektrischen Leitfähigkeit wurden homogene Scheiben der unterschiedlichen Strukturbereiche von einem vergleichbaren Fleischstück isoliert und zwischen parallelen beabstandeten Elektrodensegmenten kontinuierlich oder mit Unterbrechungen mit Wechselstrom beaufschlagt, während die elektrische Leitfähigkeit und die Temperatur gemessen wurden. Optional wurden diese stoffspezifischen Faktoren durch Division der gemessenen elektrischen Leitfähigkeit durch den Abstand der Elektrodensegmente und durch das Verhältnis zur elektrischen Leitfähigkeit eines homogenen Strukturbereichs zu diesem standardisiert. Vorzugsweise wurde dieser stoffspezifische Faktor temperaturabhängig, bzw. für jede Temperatur bestimmt.

Als optische Detektionseinrichtung wurde eine Durchleuchtungseinrichtung und alternativ oder zusätzlich eine optische Kamera eingesetzt, die eine Auswertungseinheit aufwies und eingerichtet war, geometrische Daten der unterschiedlichen Strukturbereiche im aufgenommenen Abbild zu bestimmen und diesen Strukturbereichen jeweils den stoffspezifischen Faktor zuzuordnen.

Die Auswertungseinheit war zur Übermittlung der geometrischen Daten der Strukturbereiche und den diesen zugeordneten stoffspezifischen Faktoren an die Steuerungseinheit eingerichtet. Die Steuerungseinheit war eingerichtet, diejenigen Elektrodensegmente mittels der elektrischen Energiequelle mit Strom und/oder Hochspannungsimpulsen zu beaufschlagen, die bei Anordnung des Rohstoffs zwischen die Elektrodensegmente an die jeweiligen Strukturbereiche angrenzten und die geringste elektrische Leitfähigkeit aufwiesen. Dabei war die elektrische Leitfähigkeit im Verhältnis zum Abstand der beaufschlagten Elektrodensegmente mittels des stoffspezifischen Faktors bestimmt, so dass sich eine homogene Behandlung des Rohstoffs Fleisch über dessen gesamten Querschnitt ergab.

## Patentansprüche

1. Vorrichtung zur Behandlung von Rohstoffen mit zumindest zwei beabstandeten Elektroden, die mit einer gesteuerten elektrischen Energiequelle kontaktiert sind, wobei die Elektroden jeweils von zumindest zwei elektrisch getrennten und elektrisch getrennt mit elektrischer Energie beaufschlagbaren Elektrodensegmenten (1-12, 1a-12a, 1b-12b) gebildet sind, von denen jedes gesteuert elektrisch mit der elektrischen Energiequelle (6) verbunden ist **dadurch gekennzeichnet, dass** jedes Elektrodensegment (1-12, 1a-12a, 1b-12b) mit einer zur Bestimmung der elektrischen Leitfähigkeit zwischen Elektrodensegmenten (1-12, 1a-12a, 1b-12b) eingerichteten Messeinrichtung (7) verbunden ist, wobei die elektrische Energiequelle (6) von einer Steuerungseinheit gesteuert ist und dazu eingerichtet ist, jeweils zumindest die zwei Elektrodensegmente (1-12, 1a-12a, 1b-12b) mit elektrischer Energie zu beaufschlagen, zwischen denen die geringste elektrische Leitfähigkeit bestimmt ist.

2. Vorrichtung nach Anspruch 1, **dadurch gekennzeichnet, dass** die elektrische Energiequelle (6) durch die Steuerungseinheit gesteuert ist, dass die Elektrodensegmente (1-12, 1a-12a, 1b-12b) mit elektrischer Energie beaufschlagt werden, zwischen denen die geringste elektrische Leitfähigkeit im Verhältnis zum Abstand zwischen den Elektrodensegmenten (1-12, 1a-12a, 1b-12b) bestimmt ist.

3. Vorrichtung nach einem der voranstehenden Ansprüche, **dadurch gekennzeichnet, dass** eine der Elektroden von einem Elektrodensegment gebildet ist und die andere der Elektroden von zumindest zwei Elektrodensegmenten gebildet ist und die Messeinrichtung (7) zur Bestimmung der Leitfähigkeit zwischen allen Elektrodensegmenten eingerichtet ist.

4. Vorrichtung nach einem der voranstehenden Ansprüche, **dadurch gekennzeichnet, dass** die Messeinrichtung (7) eingerichtet ist, die elektrische Leitfähigkeit für jedes kombinatorische Paar von Elektrodensegmenten (1-12, 1a-12a, 1b-12b) zu bestimmen.

5. Vorrichtung nach einem der voranstehenden Ansprüche, **dadurch gekennzeichnet, dass** die elektrische Energiequelle (6) eine Wechselstromquelle, eine Gleichstromquelle und/oder eine Hochspannungsimpulsquelle aufweist.

6. Vorrichtung nach einem der voranstehenden Ansprüche, **dadurch gekennzeichnet, dass** die Elektrodensegmente (1-12, 1a-12a, 1b-12b) eine Umfangsfläche bilden, die einen Kanal konstanten Querschnitts zur Anordnung des Rohstoffs bildet.

7. Vorrichtung nach einem der voranstehenden Ansprüche, **dadurch gekennzeichnet, dass** der von den Elektrodensegmenten (1-12, 1a-12a, 1b-12b) aufgespannte Querschnitt an einem Ende eine Einlassöffnung und am anderen Ende eine Austrittsöffnung bildet.

8. Vorrichtung nach einem der Ansprüche 1 bis 6, **dadurch gekennzeichnet, dass** der von den Elektrodensegmenten (1-12, 1a-12a, 1b-12b) aufgespannte Querschnitt jeweils endständig von zumindest 3 bis zumindest 12 Elektrodensegmenten überdeckt ist.

9. Vorrichtung nach einem der Ansprüche 6 bis 7, **dadurch gekennzeichnet, dass** die Elektrodensegmente (1-12, 1a-12a, 1b-12b) jeweils um eine Achse drehbar gelagert sind.

10. Vorrichtung nach einem der voranstehenden Ansprüche, **dadurch gekennzeichnet, dass** die Steuerungseinheit eingerichtet ist, Elektrodensegmente (1-12, 1a-12a, 1b-12b) bis zum Erreichen eines vorgegebenen Zielwerts der elektrischen Leitfähigkeit, der zwischen jedem Paar der Elektrodensegmente (1-12, 1a-12a, 1b-12b) bestimmt wird, mit elektrischer Energie zu beaufschlagen.

11. Vorrichtung nach einem der voranstehenden Ansprüche, **dadurch gekennzeichnet, dass** die Steuerungseinheit eingerichtet ist, jeweils zwei Elektrodensegmente (1-12, 1a-12a, 1b-12b) periodisch mit elektrischer Energie zu beaufschlagen, bis für jedes kombinatorische Paar von Elektrodensegmenten (1-12, 1a-12a, 1b-12b) ein vorgegebener Zielwert für die elektrische Leitfähigkeit erreicht ist.

12. Vorrichtung nach einem der voranstehenden Ansprüche, **dadurch gekennzeichnet, dass** die Steuerungseinheit eingerichtet ist, den vorgegebenen Zielwert für die elektrische Leitfähigkeit in zumindest zwei Stufen zu erreichen, wobei die Elektrodensegmente (1-12, 1a-12a, 1b-12b) bis zum Erreichen einer Stufe des Zielwertes für die elektrische Leitfähigkeit mit elektrischer Energie beaufschlagt werden, und anschließend die Elektrodensegmente (1-12, 1a-12a, 1b-12b) bis zum Erreichen eines zweiten Zielwerts für die elektrische Leitfähigkeit, der größer als der erste Zielwert für die elektrische Leitfähigkeit ist, mit elektrischer Energie beaufschlagt werden.

13. Vorrichtung nach einem der voranstehenden Ansprüche, **dadurch gekennzeichnet, dass** an der Einlassöffnung zu dem Querschnitt, der zwischen den Elektrodensegmenten (1-12, 1a-12a, 1b-12b) aufgespannt ist, eine Zuführeinrichtung für ein Lebensmittel angeordnet ist, und an der der Einlassöffnung gegenüberliegenden Auslassöffnung des Querschnitts eine Fördereinrichtung angeordnet ist.

14. Vorrichtung nach einem der voranstehenden Ansprüche, **dadurch gekennzeichnet, dass** die Elektrodensegmente (1-12, 1a-12a, 1b-12b) in einer ersten Gruppe (1-12) und zumindest einer zweiten Gruppe (1a-12a, 1b-12b) angeordnet sind, die jeweils den Umfang eines Kanals bilden und entlang der Achse des Kanal beabstandet sind.

15. Vorrichtung nach Anspruch 14, **dadurch gekennzeichnet, dass** die Steuerungseinheit eingerichtet ist, die Elektrodensegmente (1-12) der ersten Gruppe bis zum Erreichen einer ersten Stufe des Zielwerts für die elektrische Leitfähigkeit mit elektrischer Energie zu beaufschlagen und die Steuerungseinheit eingerichtet ist, die Elektrodensegmente (1a-12a, 1b-12b) einer zweiten Gruppe bis zum Erreichen einer höheren, zweiten Stufe des Zielwerts für die elektrische Leitfähigkeit mit elektrischer Energie zu beaufschlagen.

16. Vorrichtung nach einem der voranstehenden Ansprüche, **dadurch gekennzeichnet, dass** sie ein Impedanzspektrometer aufweist und die Steuerungseinheit eingerichtet ist, die elektrische Energiequelle in Abhängigkeit vom Messwert des Impedanzspektrometers zu steuern.

17. Vorrichtung nach einem der voranstehenden Ansprüche, **gekennzeichnet durch** eine optische Detektionseinrichtung, deren Erfassungsbereich einen Ort umfasst, in dem der Rohstoff angeordnet werden kann, mit einer Auswertungseinheit, die eingerichtet ist, Strukturbereiche des Rohstoffs und die geometrischen Daten dieser Strukturbereiche zu erkennen und eingerichtet ist, den Strukturbereichen stoffspezifische Faktoren für die elektrische Leitfähigkeit zuzuordnen und die Zuordnung der stoffspezifischen Faktoren für die elektrische Leitfähigkeit in Kombination mit den geometrischen Daten der Strukturbereiche an die Steuerungseinheit zu übermitteln, wobei die Steuerungseinheit eingerichtet ist, die Elektrodensegmente mit elektrischer Energie zu beaufschlagen, die mit dem stoffspezifischen Faktor die geringste elektrische Leitfähigkeit aufweisen und an die Strukturbereiche angrenzen.

18. Vorrichtung nach einem der voranstehenden Ansprüche, **dadurch gekennzeichnet, dass** die Elektrodensegmente verschieblich gelagert sind und eingerichtet sind, mit derselben vorbestimmten Kraft gegen den Lebensmittelrohstoff angeordnet zu werden.

19. Vorrichtung nach einem der voranstehenden Ansprüche, **dadurch gekennzeichnet, dass** sie eine Bräunungseinrichtung aufweist, die ein Wärmestrahler ist, beheizte Kontaktflächen und/oder eine Flamme und/oder eine Zuführeinrichtung für ein Wärmeübertragerfluid ist, die auf die Oberfläche des Lebensmittelrohstoffs gerichtet ist.

20. Vorrichtung nach einem der voranstehenden Ansprüche, **dadurch gekennzeichnet, dass** die Elektrodensegmente (1-12, 1a-12a, 1b-12b) an einem verformbaren Isolator oder an verschieblichen Trägern angeordnet sind.

21. Vorrichtung nach einem der voranstehenden Ansprüche, **gekennzeichnet durch** eine Einrichtung zur Positionsbestimmung der Elektrodensegmente (1-12, 1a-12a, 1b-12b), die mit der Messeinrichtung (7) verbunden ist, wobei die Messeinrichtung (7) eingerichtet ist, die Leitfähigkeit zwischen Elektrodensegmenten (1-12, 1a-12a, 1b-12b) im Verhältnis zu deren Abständen zu bestimmen.

22. Vorrichtung nach einem der voranstehenden Ansprüche, **gekennzeichnet durch** eine Dichtemesseinrichtung, die zur Übermittlung von Daten zur Dichte des Rohstoffs mit der Steuerungseinheit verbunden ist, wobei die Steuerungseinheit eingerichtet ist, Elektrodensegmente in Abhängigkeit von den Daten zur Dichte mit elektrischer Energie zu beaufschlagen.

23. Verfahren zur Herstellung eines Lebensmittels mit dem Schritt des Beaufschlagens eines Lebensmittelrohstoffs mit elektrischer Energie, **dadurch gekennzeichnet, dass** das Lebensmittel innerhalb einer Vorrichtung nach einem der voranstehenden Ansprüche mit elektrischer Energie beaufschlagt wird, bei dem die elektrische Leitfähigkeit zwischen jeweils zwei der Elektrodensegmente (1-12, 1a-12a, 1b-12b) bestimmt wird und jeweils die zwei Elektrodensegmente (1-12, 1a-12a, 1b-12b) gesteuert mit elektrischer Energie beaufschlagt werden, zwischen denen im Verhältnis zu ihrem Abstand die geringste elektrische Leitfähigkeit bestimmt ist.

24. Verfahren nach Anspruch 23, **dadurch gekennzeichnet, dass** das Lebensmittel kontinuierlich durch den Querschnitt befördert wird, der von den Elektrodensegmenten(1-12, 1a-12a, 1b-12b) aufgespannt wird.

25. Verfahren nach Anspruch 23 oder 24, **dadurch gekennzeichnet, dass** die Elektrodensegmente (1-12), die in einem ersten axialen Abschnitt der Vorrichtung angeordnet sind, mit elektrischer Energie beaufschlagt werden, bis für jedes kombinatorische Paar von Elektrodensegmenten (1-12) ein erster Zielwert der elektrischen Leitfähigkeit erreicht ist und die Elektrodensegmente (1a-12a, 1b-12b), die in einem an den ersten axialen Abschnitt angrenzenden zweiten axialen Abschnitt der Vorrichtung angeordnet sind, mit elektrischer Energie beaufschlagt werden, bis ein zweiter Zielwert der elektrischen Leitfähigkeit für Paare von Elektrodensegmenten (1a-12a, 1b-12b) erreicht ist, der höher als der erste Zielwert ist.

## Claims

1. Device for the treatment of raw materials comprising at least two spaced apart electrodes, which are in contact with a controlled electrical energy source, wherein the electrodes are formed by at least two electrically separated electrode segments (1-12, la-12a, lb-12b), to which electric energy can be applied in an electrically separated manner, each of said segments is connected to the electrical energy source (6) in an electrically controlled manner, **characterised in that** every electrode segment (1-12, la-12a, lb-12b) is connected to a measuring device (7) for determination of the electrical conductivity between electrode segments (1-12, la-12a, lb-12b), wherein the electrical energy source (6) is controlled by a control unit and is set up to respectively apply electric energy at least to the two electrode segments (1-12, la-12a, lb-12b) between which the lowest electrical conductivity is determined.

2. Device according to claim 1, **characterised in that** the electrical energy source (6) is controlled by the control unit, **in that** electric energy is applied to the electrode segments (1-12, la-12a, lb-12b) between which the lowest electrical conductivity is determined in relation to the distance between the electrode segments (1-12, la-12a, 1b-12b).

3. Device according to any of the preceding claims, **characterised in that** one of the electrodes is formed by one electrode segment and the other of the electrodes is formed by at least two electrode segments and the measuring device (7) is set up to determine the conductivity between all the electrode segments.

4. Device according to any of the preceding claims, **characterised in that** the measuring device (7) is set up to determine the electrical conductivity for every combinatory pair of electrode segments (1-12, la-12a, 1b-12b).

5. Device according to any of the preceding claims, **characterised in that** the electrical energy source (6) includes an alternate current source, a direct current source and/or a high-voltage pulse source.

6. Device according to any of the preceding claims, **characterised in that** the electrode segments (1-12, la-12a, lb-12b) form a circumferential surface which forms a channel of constant cross-section for arranging the raw material.

7. Device according to any of the preceding claims, **characterised in that** the cross-section spanned by the electrode segments (1-12, la-12a, lb-12b) forms at one end an inlet opening and at the other end an outlet opening.

8. Device according to one of the claims 1 to 6, **characterised in that** the cross-section spanned by the electrode segments (1-12, la-12a, lb-12b) is respectively covered at its ends by at least 3 to at least 12 electrode segments.

9. Device according to one of the claims 6 to 7, **characterised in that** the electrode segments (1-12, la-12a, lb-12b) are each mounted rotatory about an axis.

10. Device according to any of the preceding claims, **characterised in that** the control device is set up to apply electric energy to the electrode segments (1-12, la-12a, lb-12b) until reaching a predefined target value of the electrical conductivity, a value which is established between every pair of the electrode segments (1-12, la-12a, 1b-12b).

11. Device according to any of the preceding claims, **characterised in that** the control device is designed to respectively apply electric energy periodically to two electrode segments (1-12, la-12a, lb-12b), until a predefined target value is achieved for the electrical conductivity, for every combinatory pair of electrode segments (1-12, la-12a, 1b-12b).

12. Device according to any of the preceding claims, **characterised in that** the control unit is set up to reach the predefined target value for the electrical conductivity in at least two stages, wherein electric energy is applied to the electrode segments (1-12, la-12a, lb-12b) until reaching a stage of the target value for the electrical conductivity and subsequently electric energy is applied to the electrode segments (1-12, la-12a, lb-12b) until reaching a second target value for the electrical conductivity, a value which is higher than the first target value for the electrical conductivity.

13. Device according to any of the preceding claims, **characterised in that** a feeding device for foodstuffs is arranged at the inlet opening leading to the cross-section which is spanned between the electrode segments (1-12, la-12a, lb-12b) and a transportation device is arranged on the outlet opening of the cross-section opposite to the inlet opening.

14. Device according to any of the preceding claims, **characterised in that** the electrode segments (1-12, la-12a, lb-12b) are arranged in a first group (1-12) and in at least a second group (1-12, la-12a, lb-12b) which respectively form the circumference of a channel and are spaced apart along the axis of the channel.

15. Device according to claim 14, **characterised in that** the control device is set up to apply electric energy to the electrode segments (1-12) of the first group until reaching a first stage of the target value for the electrical conductivity and the control device is set up to apply electric energy to the electrode segments (1a-12a, 1b-12b) of a second group until reaching a higher, second stage of the target value for the electrical conductivity.

16. Device according to any of the preceding claims, **characterised in that** it comprises an impedance spectrometer and that the control device is set up to control the electrical energy source in dependence on the measuring value of the impedance spectrometer.

17. Device according to any of the preceding claims, **characterised by** an optical detection device, the detection area of which includes a location in which the raw material can be arranged, with an interpretation unit which is set up to recognise structure areas of the raw material and the geometrical data of said structure areas and is set up to associate material-specific factors for the electrical conductivity to the structure areas and to transfer the association of the material-specific factors for the electrical conductivity in combination with the geometrical data of the structure areas to the control unit, wherein the control unit is set up to apply electric energy to the electrode segments, which with the material-specific factor present the lowest electrical conductivity and adjoin the structure areas.

18. Device according to any of the preceding claims, **characterised in that** the electrode segments are slidably mounted and are set up to be arranged with the same predetermined force against the foodstuff raw material.

19. Device according to any of the preceding claims, **characterised in that** it includes a browning device which is a radiant heater, heated contact surfaces and/or is a flame and/or a feeding unit for a heat transfer fluid, which is directed onto the surface of the foodstuff raw material.

20. Device according to any of the preceding claims, **characterised in that** the electrode segments (1-12, la-12a, lb-12b) are arranged on a deformable insulator or on movable carriers.

21. Device according to any of the preceding claims, **characterised by** a device for determination of the position of the electrode segments (1-12, la-12a, lb-12b), which is connected to the measuring device (7), wherein the measuring device (7) is set up to determine the conductivity between electrode segments (1-12, la-12a, lb-12b) in relation to their distances.

22. Device according to any of the preceding claims, **characterised by** a density measuring device, which is connected to the control unit for transmitting data relating to the density of the raw material, wherein the control unit is set up to apply electric energy to electrode segments according to the data relating to the density.

23. Method for producing a foodstuff with the step of applying electric energy to a foodstuff raw material, **characterised in that** electric energy is applied to the foodstuff inside a device according to any of the preceding claims, wherein the electrical conductivity is determined between each two of the electrode segments (1-12, la-12a, lb-12b) and electric energy is applied to the respective two electrode segments (1-12, la-12a, lb-12b) in a controlled manner between which the lowest electrical conductivity is determined in relation to their distance.

24. Method of claim 23, **characterised in that** the foodstuff is conveyed continuously through the cross-section which is spanned by the electrode segments (1-12, la-12, 1b-12b).

25. Method according to claim 23 or 24, **characterised in that** electric energy is applied to the electrode segments (1-12) which are arranged in a first axial section of the device until a first target value of the electrical conductivity is reached for every combinatory pair of electrode segments (1-12) and that electric energy is applied to the electrode segments (la-12a, lb-12b) which are arranged in a second axial section of the device adjoining the first axial section until a second target value of the electrical conductivity is reached for pairs of electrode segments (1a-12a, lb-12b), which is higher than the first target value.

## Revendications

1. Equipement de traitement de matières premières comportant aux moins deux électrodes espacées, qui sont contactées par une source d'énergie électrique commandée, où les électrodes sont formées chacune par au moins deux segments d'électrode (1-12, la-12a, 1b-12b) séparés électriquement et pouvant être excités par un courant électrique, chaque segment étant commandé électriquement par la source d'énergie électrique, **caractérisé en ce que** le segment d'électrode (1-12, la-12a, 1b-12b) est connecté à un dispositif de mesure (7) installé entre les segments d'électrode (1-12, la-12a, 1b-12b) pour déterminer la conductivité électrique, où la source d'énergie électrique (6) est commandée par une unité de commande et est agencée pour appliquer une énergie électrique respectivement au moins aux deux segments d'électrode (1-12, la-12a, 1b-12b), entre lesquels on définit la conductivité électrique la plus faible.

2. Equipement selon la revendication 1, **caractérisé en ce que** la source d'énergie électrique (6) est commandée par l'unité de commande de telle sorte que les segments d'électrode (1-12, la-12a, 1b-12b) sont excités par de l'énergie électrique, entre lesquels on définit la conductivité électrique la plus faible par rapport à la distance entre les segments d'électrode (1-12, la-12a, lb-12b).

3. Equipement selon l'une des revendications précédentes, **caractérisé en ce que** l'une des électrodes est constituée d'un segment d'électrode et l'autre des électrodes est constituée d'au moins deux segments d'électrode et le dispositif de mesure (7) est configuré pour déterminer la conductivité entre tous les segments d'électrode.

4. Equipement selon l'une des revendications précédentes, **caractérisé en ce que** le dispositif de mesure (7) est configuré pour définir la conductivité électrique pour chaque paire combinatoire de segments d'électrode (1-12, la-12a, lb-12b).

5. Equipement selon l'une des revendications précédentes, **caractérisé en ce que** la source d'énergie électrique (6) présente une source de courant alternatif, une source de courant continu et/ou une source d'impulsions haute tension.

6. Equipement selon l'une des revendications précédentes, **caractérisé en ce que** les segments d'électrode (1-12, la-12a, 1b-12b) constituent une surface périphérique formant un canal de section transversale constante pour disposer la matière première.

7. Equipement selon l'une des revendications précédentes, **caractérisé en ce que** la section transversale délimitée par les segments d'électrode (1-12, la-12a, 1b-12b) constitue une ouverture d'entrée à une extrémité et une ouverture de sortie à l'autre extrémité.

8. Equipement selon l'une des revendications 1 à 6, **caractérisé en ce que** la section transversale délimitée par les segments d'électrode (1-12, la-12a, 1b-12b) est recouverte respectivement par au moins 3 à au moins 12 segments d'électrode en position terminale.

9. Equipement selon l'une des revendications 6 ou 7, **caractérisé en ce que** les segments d'électrode (1-12, la-12a, lb-12b) sont montés rotatifs respectivement autour d'un axe.

10. Equipement selon l'une des revendications précédentes, **caractérisé en ce que** l'unité de commande est configurée pour appliquer une énergie électrique aux segments d'électrode (1-12, la-12a, 1b-12b) pour atteindre une valeur cible prédéterminée de la conductivité électrique qui est définie entre chaque paire des segments d'électrode (1-12, la-12a, 1b-12b).

11. Equipement selon l'une des revendications précédentes, **caractérisé en ce que** l'unité de commande est configurée pour appliquer une énergie électrique respectivement à deux segments d'électrode (1-12, la-12a, lb-12b) périodiquement pour atteindre une valeur cible prédéterminée pour la conductivité électrique pour chaque paire combinatoire de segments d'électrode (1-12, la-12a, lb-12b).

12. Equipement selon l'une des revendications précédentes, **caractérisé en ce que** l'unité de commande est configurée pour atteindre la valeur cible prédéterminée pour la conductivité électrique en au moins deux phases, où les segments d'électrode (1-12, la-12a, 1b-12b) sont excités par de l'énergie électrique pour atteindre une phase de la valeur cible pour la conductivité électrique, et ensuite les segments d'électrode (1-12, la-12a, 1b-12b) sont excités par de l'énergie électrique pour atteindre une deuxième valeur cible pour la conductivité électrique qui est supérieure à la première valeur cible pour la conductivité électrique.

13. Equipement selon l'une des revendications précédentes, **caractérisé en ce qu'**un dispositif d'alimentation pour denrées alimentaires est agencé au niveau de ouverture d'entrée jusqu'à la section transversale prévue entre les segments d'électrode (1-12, la-12a, 1b-12b) et qu'un dispositif convoyeur est agencé au niveau de l'ouverture de sortie de la section transversale opposée à l'ouverture d'entrée.

14. Equipement selon l'une des revendications précédentes, **caractérisé en ce que** les segments d'électrode (1-12, la-12a, 1b-12b) sont agencés dans un premier groupe (1-12) et au moins dans un deuxième groupe (la-12a, 1b-12b), qui forment respectivement le périmètre d'un canal et sont espacés le long de l'axe du canal.

15. Equipement selon la revendication 14, **caractérisé en ce que** l'unité de commande est configurée pour appliquer une énergie électrique aux segments d'électrode (1-12, la-12a, 1b-12b) du premier groupe pour atteindre une première phase de la valeur cible pour la conductivité électrique et l'unité de commande est agencée pour appliquer une énergie électrique aux segments d'électrode (1-12, la-12a, 1b-12b) du deuxième groupe pour atteindre une deuxième phase, plus élevée, de la valeur cible pour la conductivité électrique.

16. Equipement selon l'une des revendications précédentes, **caractérisé en ce qu'**il présente un spectromètre d'impédance et l'unité de commande est agencée pour commander la source d'énergie électrique en fonction de la valeur de mesure du spectromètre d'impédance.

17. Equipement selon l'une des revendications précédentes, **caractérisé par** un dispositif de détection optique, dont la zone de détection comporte un endroit dans lequel la matière première peut être agencée avec une unité d'interprétation qui est agencée pour détecter des zones structurelles de la matière première et les données géométriques de ces zones structurelles et agencée pour affecter aux zones structurelles des facteurs spécifiques aux substances pour la conductivité électrique et transmettre à l'unité de commande l'affectation des facteurs spécifiques aux substances pour la conductivité électrique en combinaison avec les données géométriques des zones structurelles, où l'unité de commande est configurée pour appliquer une énergie électrique aux segments d'électrode qui présentent la conductivité électrique la plus faible avec le facteur spécifique aux substances et sont limitrophes des zones structurelles.

18. Equipement selon l'une des revendications précédentes, **caractérisé en ce que** les segments d'électrode sont montés mobiles et configurés pour être amenés contre les denrées alimentaires avec la même force prédéterminée.

19. Equipement selon l'une des revendications précédentes, **caractérisé en ce qu'**il présente un dispositif de brunissage, à savoir un rayonneur thermique, des surfaces de contact chauffées et/ou une flamme et/ou un dispositif d'acheminement pour un fluide caloporteur qui est prévu à la surface des denrées alimentaires.

20. Equipement selon l'une des revendications précédentes, **caractérisé en ce que** les segments d'électrode (1-12, la-12a, 1b-12b) sont agencés sur un isolateur déformable ou bien des longerons mobiles.

21. Equipement selon l'une des revendications précédentes, **caractérisé par** un dispositif permettant de déterminer la position des segments d'électrode (1-12, la-12a, 1b-12b), dispositif connecté au dispositif de mesure (7) où le dispositif de mesure (7) est agencé pour déterminer la conductivité entre les segments d'électrode (1-12, la-12a, 1b-12b) par rapport aux distances les séparant.

22. Equipement selon l'une des revendications précédentes, **caractérisé par** un dispositif de mesure d'épaisseur qui est relié à l'unité de commande pour transmettre des données d'épaisseur de la matière première à l'unité de commande, où l'unité de commande est agencée pour appliquer une énergie électrique à des segments d'électrode en fonction de données concernant l'épaisseur.

23. Procédé de fabrication d'une denrée alimentaire avec la phase d'application d'énergie électrique à des denrées alimentaires, **caractérisé en ce que** l'on applique de l'énergie électrique aux denrées alimentaires à l'intérieur d'un équipement selon l'une des revendications précédentes, dans lequel on définit la conductivité électrique entre respectivement deux segments d'électrode (1-12, la-12a, lb-12b) et qui est agencé pour appliquer une énergie électrique respectivement au moins aux deux segments d'électrode (1-12, la-12a, lb-12b) entre lesquels on définit la conductivité électrique la plus faible par rapport à la distance les séparant.

24. Procédé selon la revendication 23, **caractérisé en ce que** les denrées alimentaires sont acheminées en continu à travers la section transversale délimitée par les segments d'électrode (1-12, la-12a, lb-12b).

25. Procédé selon les revendications 23 ou 24, **caractérisé en ce que** les segments d'électrode (1-12) agencés dans une première section axiale de l'équipement sont excités par de l'énergie électrique pour atteindre une première valeur cible pour la conductivité électrique pour chaque paire combinatoire de segments d'électrode (1-12) et les segments d'électrode (la-12a, 1b-12b) qui sont agencés au niveau d'une deuxième section axiale de l'équipement, limitrophe de la première section axiale, sont excités par de l'énergie électrique pour atteindre une deuxième valeur cible de conductivité électrique pour des paires de segments d'électrode (la-12a, 1b-12b) qui est supérieure à la première valeur cible.
